# EUROPÄISCHE PATENTSCHRIFT

(11) **EP 2 694 841 B1**
(45) Veröffentlichungstag und Bekanntmachung des Hinweises auf die Patenterteilung: **23.03.2016**
(21) Anmeldenummer: 12714608.2
(22) Anmeldetag: 30.03.2012
(51) Int. Cl.: F16G 13/16

(54) **ENERGIEFÜHRUNGSKETTE MIT DEFORMIERBAREN GELENKELEMENTEN**
CABLE CARRIER CHAIN WITH DEFORMABLE JOINT ELEMENTS
CHAÎNE PORTE-CÂBLES COMPORTANT DES ÉLÉMENTS D'ARTICULATION DÉFORMABLES

(30) Priorität: 01.04.2011 DE 202011004785 U
(43) Veröffentlichungstag der Anmeldung: 12.02.2014
(73) Patentinhaber: Igus GmbH, 51147 Köln (DE)
(72) Erfinder: BLASE, Günter, 51429 Bergisch Gladbach (DE); JAEKER, Thilo-Alexander, 53757 Sankt Augustin (DE)
(74) Vertreter: Lippert, Stachow & Partner
(86) Internationale Anmeldenummer: PCT/EP2012/055782
(87) Internationale Veröffentlichungsnummer: WO 2012/131033

(56) Entgegenhaltungen:
- WO-A1-02/086349
- DE-A1-102008 020 907
- DE-A1-102008 046 701
- DE-A1-102008 047 323
- DE-A1-102009 007 758
- DE-U1- 29 607 492

## Beschreibung

Die Erfindung betrifft allgemein eine Energieführungskette zur Führung von Kabeln, Schläuchen oder dergleichen. Insbesondere betrifft die Erfindung eine solche Energieführungskette mit mehreren Laschen, die zwei parallele und durch separate Querstege verbundenen Laschensträngen bilden. Hierbei sind die Laschen mittels Gelenkverbindung gegeneinander abwinkelbar.

Eine derartige Energieführungskette ist beispielsweise aus dem.deutschen Patent DE 35 31 066 der Anmelderin bekannt. Bei Energieführungsketten gemäß dem Prinzip aus DE 35 31 066 wird die Gelenkverbindung zwischen benachbarten Laschen durch auf halber Höhe der Lasche angeordnete Schwenkbolzen bzw. Schwenkzapfen und korrespondierende Ausnehmungen gebildet. Obwohl sich derartige Energieführungsketten sehr bewährt haben, weisen sie den Nachteil auf, dass die Gelenkverbindung aus Schwenkzapfen und entsprechender Lagerung aufgrund von Reibung trotz hoher Lebensdauer unvermeidbar einem gewissen Verschleiß unterlegt. Dieser Verschleiß kann bspw. zu einem gewissen Abrieb führen, welcher allgemein und insbesondere bei Produktion unter Reinraumbedingungen oder bei Lebensmittelherstellung unerwünscht ist.

Eine Weiterentwicklung zur Reduzierung des Verschleiß und Abriebs in Energieführungsketten ist aus der internationalen Patentanmeldung WO 02/086349 der Anmelderin bekannt. Hierbei wird die Gelenkverbindung zwischen benachbarten Laschen durch in Abwinkelungsrichtung der Kettenlaschen elastisch deformierbare Gelenkelemente gebildet. Bei der sehr verschleißarmen Energieführungskette gemäß WO 02/086349 hingegen sind die Laschen in beiden Strängen bezüglich der längsgerichteten Hauptebene der Energieführungskette spiegelsymmetrisch, d.h. die Laschen des einen Strangs sind zu denen des anderen Strangs gespiegelt und folglich verschieden. Somit erfordern diese spiegelsymmetrischen Kettenlaschen unterschiedliche Spritzgussformen zur Herstellung.

Es hat sich, trotz vielerlei Vorzüge und der erfolgreichen Verbreitung von Energieführungsketten nach WO 02/086349 nun herausgestellt, das die Unterschiedliche Form in ungünstigen Fällen dazu führen kann, dass aufgrund von Herstellungstoleranzen in beiden Kettensträngen unterschiedliche Abwinkelungsbegrenzungen, unterschiedliches Spiel und insbesondere unterschiedliche Längen des Strangs entstehen können. Dies ist offensichtlich unerwünscht, insbesondere bei verhältnismäßig langen Ketten. ,

Aus der Offenlegungsschrift DE 10 2007 061 296 ist eine Energieführungskette bekannt, welche zur Reduzierung der Anzahl Bauteile bereichsweise spiegelsymmetrisch ausgeführte Module aus mehreren Außenlaschen sowie spiegelsymmetrisch ausgeführte Innenlaschen verwendet. Nachteilig ist hierbei die vorgeschlagene Verbindung der einstückig hergestellten Module in Kettenlängsrichtung. Letztere führt nämlich zu unterschiedlichen Formen an den Enden des linken und rechten Laschenstrangs sowohl am feststehenden als auch am bewegten Kettenende. Noch ausgeprägter ist das Problem unterschiedlicher Enden der Laschenstränge bei einer Energieführungskette gemäß der Offenlegungsschrift DE 10 2008 020 907. Hierin wird vorgeschlagen, die gesamte Kette aus nur einem einzigen kammartigen Modul mit Außenlaschen, Querstegen und Innenlaschen aufzubauen. Die gegeneinander versetzte Verschachtelung dieser kammartigen Module führt jedoch dazu, dass die zu befestigender Enden nicht nur unterschiedlich geformt, sondern zudem in Längsrichtung unterschiedlich weit versetzt sind.

Von vorgenanntem Stand der Technik ausgehend, liegt der Erfindung somit als eine erste technische Aufgabe zugrunde, eine Energieführungskette mit den Vorzügen einer verschleißarmen Gelenkverbindung vorzuschlagen, welche zudem toleranzbedingte Unterschiede zwischen den gegenüberliegenden Ketten- bzw. Laschensträngen, insbesondere Längenunterschiede, zuverlässig vermeidet.

Bei einer gattungsgemäßen Energieführungskette nach dem Oberbegriff des Anspruchs 1 wird diese erste Aufgabe erfindungsgemäß dadurch gelöst, dass sich in jedem Laschenstrang in Längsrichtung der Kette jeweils unterschiedliche Innenlaschen und Außenlaschen abwechseln. Hierbei sind sowohl die Innenlaschen als auch die Außenlaschen jeweils zu ihrer senkrecht zur Längsrichtung verlaufenden Höhen-Mittelebene spiegelsymmetrisch gestaltet. Dadurch können baugleiche Innenlaschen und baugleiche Außenlaschen zum lösbaren Zusammensetzen beider Laschensträngen.verwendet werden, welche jeweils für sich genommen in der gleichen Form hergestellt werden. Die in einer Form, insbesondere Spritzgussform, hergestellten Laschen eines Typs werden somit in beiden Laschensträngen verwendet. Im Ergebnis wirken sich eventuelle Toleranzen in beiden Strängen identisch und symmetrisch aus, so dass insbesondere keine Längenunterschiede mehr entstehen können. Ferner sieht die Lösung vor, die Gelenkverbindung zwischen benachbarten Laschen durch ein spiegelsymmetrisches Gelenkelement zu bilden, welches insbesondere gegenüberliegende Endbereiche aufweist, die bezüglich der Höhen-Mittelebene spiegelsymmetrisch ausgebildet sind. Diese Endbereiche dienen zur Befestigung bzw. Sicherung jeweils benachbarter, lösbar miteinader verbundener Innen- und Außenlaschen in Längsrichtung der Kette. Indem auch die Verbindung benachbarter Laschen in Längsrichtung durchgängig spiegelsymmetrisch zur Höhen-Mittelebene gestaltet ist, werden Stränge erzielt die insgesamt bezüglich der längsgerichteten Hauptebene der Energieführungskette spiegelsymmetrisch sind. Somit weisen beide Stränge links und rechts, sowohl am feststehenden als auch am bewegten Kettenende, jeweils identische Abschlüsse zur Befestigung auf. Hierdurch wird unter anderem die Befestigung vereinfacht und die Zahl der erforderlichen Befestigungsteile auf nur eine Bauteilform verringert.

Die Gelenkelemente können insbesondere als separate Bauteile ausgeführt sein. Alternativ können die Gelenkelemente auch an einem der beiden Laschentypen, d.h. der an der Innenlasche oder an der Außenlasche, stirnseitig hervorstehend angeformt sein, insbesondere durch form- oder stoffschlüssiges Anspritzen.

Bevorzugt wird das Gelenkelement in der in Längsrichtung verlaufenden Längs-Mittelebene der Laschen angeordnet. Dies erlaubt es bei geeigneter Gestaltung die Laschen auch um ihre Querachse gedreht einzusetzen. In einer solchen bevorzugten Ausführung unterscheiden sich die Innenlasche und die Außenlasche in ihrem Umriss im Seitenansicht, so dass je nach Anordnung eine andere Kurvenform der Kette möglich wird. Insbesondere unterscheiden sich Innen- und Außenlasche zumindest durch die unterschiedliche Gestaltung ihrer in Längsrichtung gegenüberliegenden Stirnseiten. Diese Stirnseiten bilden bei mindestens einer der beiden unterschiedlichen Laschentypen Anschlagflächen aus, welche zur Begrenzung sowohl der Endlage mit größter Abwinkelung als auch der Endlage mit geringster Abwinkelung dienen. Zur unterschiedlichen Begrenzung sind diese Anschlagflächen bezüglich der Längs-Mittelebene der Lasche asymmetrisch. Durch die Anordnung der Anschlagflächen an den Stirnseiten mindestens eines Laschentyps wird eine stabile Anordnung durch eine größtmögliche Überlappung zwischen Innen- und Außenlaschen gewährleistet. Zudem ermöglicht die asymmetrische Ausgestaltung gegenüber der Kettenlängsebene, die Umlenkrichtung der Kette durch Umdrehen der asymmetrischen Lasche um die Querachse nach Wunsch anzupassen.

In einer bevorzugten Ausführung weist die Lasche des zweiten Laschentyps Anschlagflächen auf, welche mit den asymmetrischen Anschlagflächen an den Stirnseiten der ersten Lasche zusammenwirken und bezüglich der Längs-Mittelebene in geringerem Maß asymmetrisch sind. Eine geringere Asymmetrie, verglichen mit den Anschlagflächen der ersten Lasche, ermöglicht es ebenfalls durch Umkehren der zweiten Lasche um die Querachse, eine zusätzliche allerdings feiner abstimmbare Einstellung der Schwenkbegrenzung oder der Vorspannung zu erzielen.

In einer bevorzugten Ausführung weisen Innenlaschen und Außenlaschen jeweils in Längsrichtung aneinander grenzende verdickte Mittenbereiche auf sowie hieran stirnseitig anschließende jeweils dünnere Überlappungsbereiche. Diese Überlappungsbereiche überlappen die Innen- und Außenlaschen in Längsrichtung. Hierbei wirken die Anschlagflächen an den Stirnseiten der ersten Lasche mit entsprechenden Anschlagflächen am verdickten Mittenbereich der zweiten Lasche zusammen. Ferner wirken vorzugsweise zusätzliche dritte und vierte Anschlagflächen an den Stirnseiten der zweiten Lasche mit entsprechenden Anschlagflächen am Mittenbereich der ersten Lasche zusammen. Durch eine entsprechende Verdoppelung der Anschlagflächen im inneren und im äußeren Bereich der Laschen wird die Stabilität der Kette in beiden Anschlagstellungen erhöht.

Es erweist sich als vorteilhaft, wenn die Anschlagflächen an den Stirnseiten der ersten Lasche gekrümmt, insbesondere konkav gekrümmt, sind. Entsprechend vorteilhaft ist es, wenn die zusammenwirkenden Anschlagflächen der zweiten Lasche kongruent gekrümmt, d.h. insbesondere konvex kongruent gekrümmt, ausgebildet sind. Ein sanfter sich anschmiegender Anschlag wird hierbei dadurch erzielt, dass die Anschlagflächen an den Stirnseiten der ersten Lasche sowie die zusammenwirkenden Anschlagflächen an der zweiten Lasche jeweils mit gleicher Krümmung, bspw. gemäß einer Rollkurve, gekrümmt sind. In der Ausführung mit zusätzlichen dritten und vierten Anschlagflächen sind auch diese vorzugsweise paarweise kongruent gekrümmt, jedoch mit stärkerer bzw. schärfer ausgeprägter Krümmung als die gekrümmten Anschlagflächen an den Stirnseiten der ersten Lasche. Die Krümmungen der Anschlugflächen sind bevorzugt gemäß einer Kurvenform gewählt, welche nicht nur ein flächiges Anschlagen vermeidet, sondern zudem sukzessives Anschmiegen zur erhöhten Stabilität im Anschlag ermöglicht.

Zur Befestigung der Querstege erweist es sich als vorteilhaft, wenn Innenlasche oder Außenlasche oder beide an ihrer oberen und unteren Schmalseite jeweils eine mittige Aussparung aufweisen, in welcher ein Halteschaft vorgesehen ist, der in Längsrichtung der Kette verläuft. Dies ermöglicht eine schwenkbare, scharnierartige Befestigung des Querstegs an der entsprechenden Lasche, beispielsweise mittels eines hierfür vorgesehenen Scharniers am Quersteg. Hierbei ist jeder Quersteg zumindest einseitig schwenkbar am entsprechenden Halteschaft befestigt, vorzugsweise jedoch beidseitig schwenkbar an gegenüberliegenden Halteschaften befestigt. Durch die Verwendung von solchen Lagerbolzen oder Halteschaften in den Schmalseiten wird das störende nach innen Rage bekannter Rastnasen vermieden.

Vorzugsweise wird zur schwenkbaren Befestigung von herkömmlichen bereits verfügbaren Querstegen als Adapter ein Schwenkhorn, als separates Bauteil, vorgesehen. Entsprechend separate Schwenkhörner bilden einen von obenstehender Problemlösung unabhängigen, weiteren Erfindungsaspekt. In einer bevorzugten Ausgestaltung hat ein solches Schwenkhorn einerseits einen scharnierartigen Griff zur schwenkbaren Lagerung am Halteschaft sowie andererseits eine zu den Querstegen passende Befestigung, z.B. zwei in Längsrichtung der Kette gegenüberliegende Rastvorsprünge zur Befestigung mittels Schnappverschluss am Quersteg. Diese Ausführung verhindert zudem eine Aufschwenkung bei Öffnen des Schnappverschlusses und andererseits ein Öffnen des Schnappverschlusses beim Aufschwenken.

Bei Verwendung derartiger Schwenkhörner ist es vorteilhaft, am Halteschaft Rastmittel vorzusehen, welche mit dem Schwenkhorn zusammenwirken zur Einrastung in der aufgeklappten Stellung oder in der zugeklappten Stellung oder vorzugsweise in beiden Stellungen.

In einer von den oben genannten Aspekten unabhängigen bevorzugten Ausführung umfasst jedes Gelenkelement mindestens ein erstes Schnappmittel, welches mit einem entsprechenden zweiten Schnappmittel an einem der beiden Laschentypen zusammenwirkt. Hierbei bilden das erste und das zweite Schnappmittel eine Schnappverbindung zur Halterung des jeweils einen Laschentyps am anderen Laschentyp in Richtung quer zur Längsrichtung der Kette.

Bei dieser bevorzugten Ausführung mit Schnappverbindung ist es vorteilhaft zur Materialeinsparung, wenn lediglich jede zweite Lasche auf beiden Laschensträngen mittels eines oberen und eines unteren Querstegs verbunden ist. Die anderen Laschen, welche dazwischen liegen, können durch besagte Schnappverbindung an den mittels Querstegen verbundenen Laschen gehalten werden. In einer besonders einfachen Ausführung sind die Gelenkelemente als separate Bauteile ausgeführt, welche jeweils drei Laschen, insbesondere zwei Laschen ohne Querstege und eine dazwischen liegende Lasche mit Quersteg, verbinden. Bei als separate Bauteile ausgeführten Gelenkelementen wird es bevorzugt, wenn jedes Gelenkelement eine maximale Breite hat, die im Wesentlichen der maximalen Breite beider Laschentypen entspricht, diese jedoch nicht überschreitet. Hierdurch wird die maximal mögliche Breite ohne Überstand ausgenutzt. Zusätzlich kann das Gelenkelement in einem mittleren Bereich eine Verjüngung aufweisen. In dieser Verjüngung kann das Gelenkelement in Halterichtung der oben genannten Schnappverbindung an der mittleren der drei Laschen gehalten werden.

Gemäß einem weiteren unabhängigen Aspekt ist es vorteilhaft, wenn das Gelenkelement Dämpfungsfortsätze aufweist, die mit einem freien Ende zur Dämpfung zwischen zusammenwirkenden Anschlagflächen der Laschen hineinreichen können. Um das Anschmiegen bzw. Anschlagen der zusammenwirkenden Anschlagflächen nicht zu beeinträchtigen kann an einem der beiden Laschentypen jeweils eine Aussparung zur teilweisen oder ganzen Aufnahme des Dämpfungsfortsatzes vorgesehen werden.

Schließlich ist es zweckmäßig, wenn diejenige Lasche mit der größeren Asymmetrie im Seitenumriss als Außenlasche vorgesehen ist und diejenige Lasche mit geringerer Asymmetrie als Innenlasche vorgesehen ist.

Weitere Einzelheiten, Vorteile und Merkmale der Erfindung lassen sich dem nachfolgenden Teil der Beschreibung entnehmen, in welchem ein Ausführungsbeispiel anhand der beigefügten Zeichnungen näher erläutert wird. Es zeigen
- Fig.1:: eine perspektivische Teilansicht der erfindungsgemäßen Energieführungskette;
- Fig.2:: verschiedene Ansichten gemäß Normalprojektion einer Innenlasche der Energieführungskette nach Fig.1;
- Fig.3:: verschiedene Ansichten gemäß Normalprojektion einer Außenlasche der Energieführungskette nach Fig.1;
- Fig.4:: eine Seitenansicht und eine Draufsicht eines erfindungsgemäßen Gelenkelements gemäß einem zusätzlichen Aspekt der Erfindung;
- Fig.5:: eine Vorderansicht und eine Seitenansicht eines Schwenkhorns zur schwenkbaren Befestigung der Querstege gemäß einem weiteren Aspekt der Erfindung;
- Fig.6:: einen Querschnitt durch die Energieführungskette mit Schwenkhorn gemäß Fig.5 bei aufgeschwenktem oberen Quersteg;

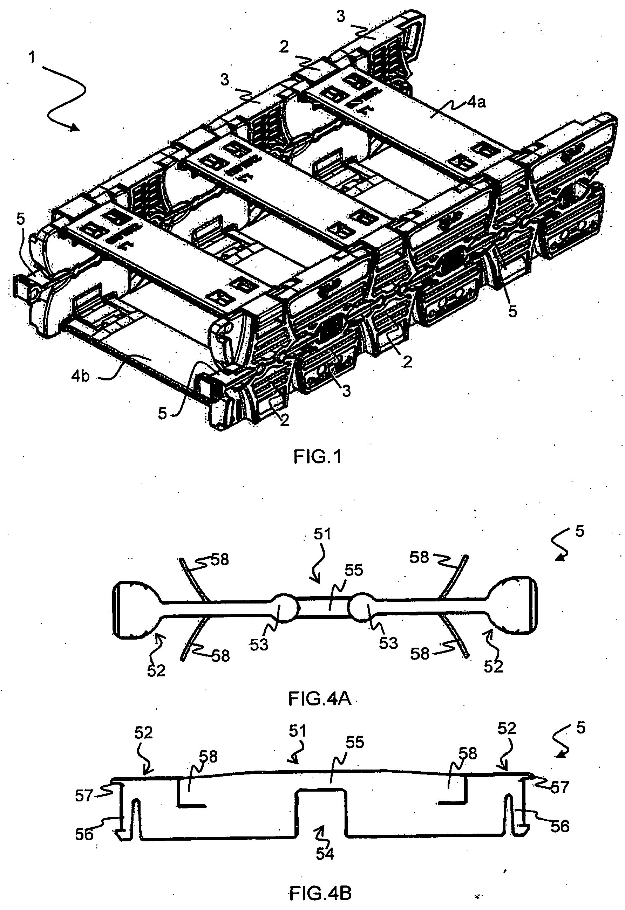

Fig.1 zeigt in perspektivischer Darstellung einen Teilbereich einer erfindungsgemäßen Energieführungskette, allgemein mit 1 bezeichnet. Die Energieführungskette 1 besteht aus einer Vielzahl gelenkig miteinander verbundenen Kettenlaschen 2, 3. Die Kettenlaschen 2, 3 sind zu zwei parallelen und durch obere und untere Querstege 4a, 4b lösbar verbundene Laschenstränge zusammengesetzt. Zwischen den Laschensträngen 2, 3 und den Querstegen 4a, 4b bildet die Energieführungskette 1 einen Hohlraum, welcher als Führungskanal beispielsweise für Kabel oder Schläuche dient. Durch den Satz Einzelteile bestehend aus zwei parallel gegenüberliegenden Laschen 2, 3 und zwei zugehörigen Querstegen 4a, 4b werden formstabile, verdreh- und torsionssteife Kettenglieder als kleinste sich wiederholende Ketteneinheit gebildet. Die dargestellte Energieführungskette 1 kann bogenförmig zur Bildung eines Untertrums, eines Umlenkbereichs und eines Obertrums verformt werden, bspw. um zwei relativ zueinander bewegliche Maschinenteile mit Energie- und/oder Datenleitungen zu verbinden.

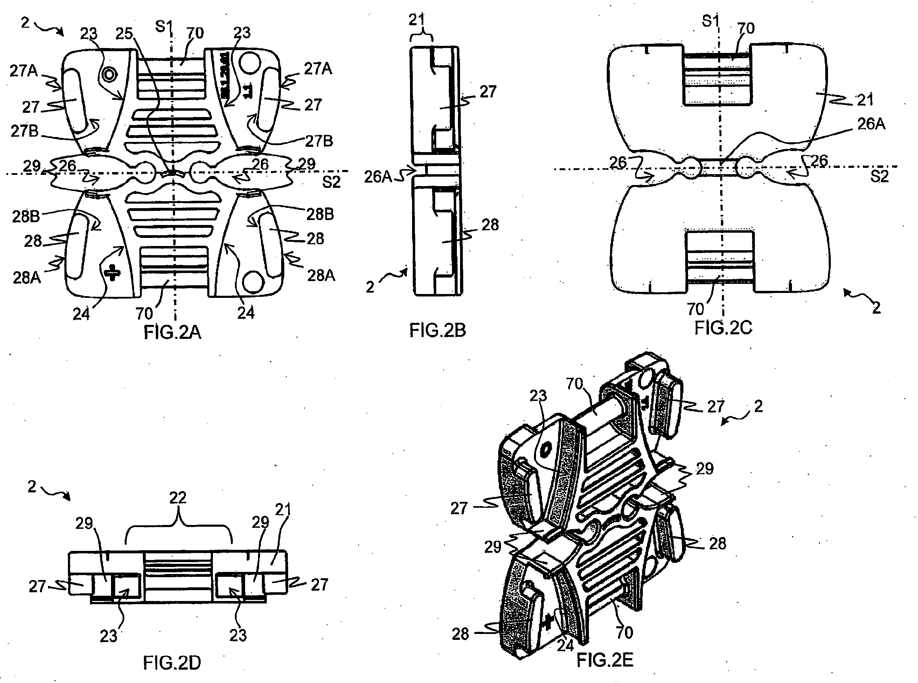

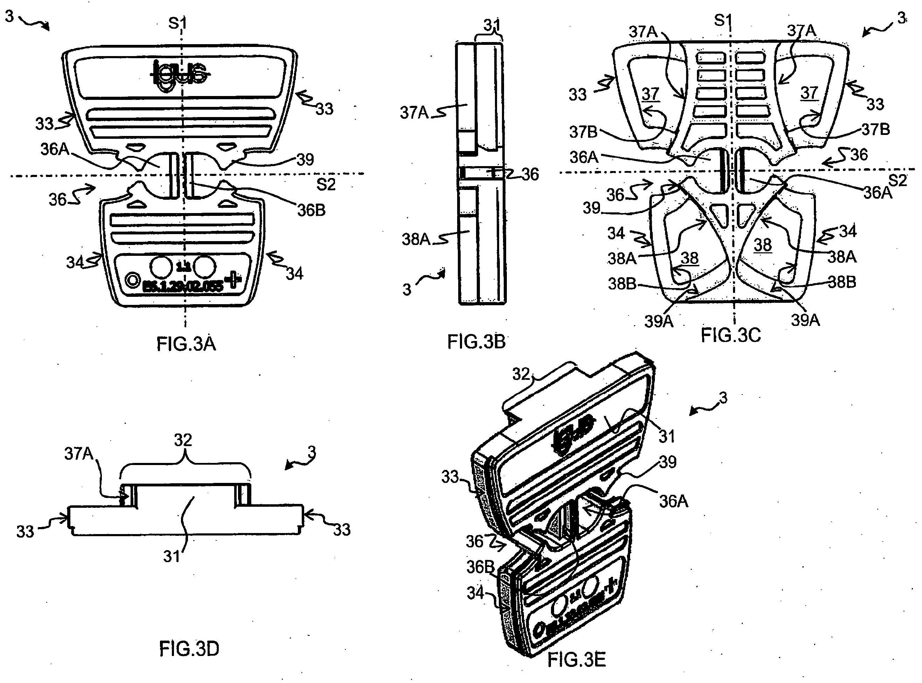

Wie aus Fig.1 ersichtlich, wechseln sich in jedem Laschenstrang in Längsrichtung der Kette 1 jeweils unterschiedlich gestaltete Innenlaschen 2 mit Außenlaschen 3 ab. In beiden Laschensträngen werden jedoch die gleichen Innenlaschen 2 und die gleichen Außenlaschen 3 verwendet. Wie aus Fig.2 und Fig.3 näher ersichtlich, ist jede Innenlasche 2 und jede Außenlasche 3 für sich genommen jeweils zu ihrer Höhen-Mittelebene S1, welche senkrecht zur Längsrichtung bzw. neutralen Faser der Energieführungskette 1 verläuft, spiegelsymmetrisch ausgebildet. Dementsprechend kann durch 180°-Drehung um die Höhen-Achse sowohl die Innenlasche 2 als auch die Außenlasche 3 jeweils im linken oder im rechten Laschenstrang, wie in Fig.1 gezeigt, verwendet werden.

Wie weiterhin in Fig.1 gezeigt sind die Gelenkverbindungen zwischen den sich abwechselnden Innen- und Außenlaschen 2, 3 durch ein Gelenkelement 5 gebildet. Wie in Fig.1 gezeigt, erstrecken sich die Gelenkelemente 5 vorzugsweise im Wesentlichen über die gesamte Breite der Laschen 2, 3 und schließen bündig an deren Seitenflächen innen und außen ab.

Das Gelenkelement 5 ist ein in Längsrichtung der Energieführungskette 1 erstrecktes, plattenartiges und vorzugsweise separates Bauteil. Das entsprechende Gelenkelement 5 ist in Fig.4 näher gezeigt. Entsprechend den Laschen 2, 3 ist auch das Gelenkelement 5 bezüglich der Höhen-Mittelebene S1 spiegelsymmetrisch ausgebildet. Es umfasst einen mittleren Bereich 51 sowie gegenüberliegende Endbereiche 52. Im gezeigten Ausführungsbeispiel verbindet das Gelenkelement 5 jeweils genau drei Laschen 2, 3 miteinander, hier jeweils zwei Außenlaschen 3 mit einer dazwischen liegenden Innenlasche 2. Zur Befestigung an der Innenlasche 2 weist das Gelenkelement 5 im mittleren Bereich 51 zwei quer erstreckte Verdickungen 53 auf. Die Verdickungen 53, welche zur Sicherung bzw. Befestigung der Innenlasche 2 in Längsrichtung der Kette 1 dienen, sind annähernd zylindrisch. Ferner hat das Gelenkelement 5 in seinem mittleren Bereich 51, wie am besten aus Fig.4b ersichtlich, eine Aussparung 54. Die Aussparung ist nur zu einer Seite hin offen und in Längsrichtung begrenzt durch die Verdickungen 53. Das Gelenkelement greift mit der Aussparung 54 formschlüssig in den mittleren Bereich der Innenlasche 2. Hierdurch wird eine zusätzliche Befestigung in Längsrichtung erzielt und zugleich anhand eines die Aussparung 54 einseitig begrenzenden Stegs 55 eine Sicherung in Richtung quer zur Längsrichtung, vorzugsweise gegen Verschiebung nach außen hin, gewährleistet. Zur Verbindung mit den beiden Außenlaschen 3 sind die gegenüberliegenden Endbereiche 52 des Gelenkelements 5 als quer liegende Verdickungen näherungsweise halbzylindrisch gestaltet. In den Eridbereichen 52 sind Schnappmittel, insbesondere Schnapphaken 56 vorgesehen. Die Schnapphaken 56 sind durch Einkerbungen quer zur Längsrichtung, näherungsweise gleicher Tiefe wie die Aussparung 54, in den verdickten Endbereichen 52 gebildet. An der den Widerhaken der Schnapphaken 56 gegenüberliegenden Seite der Endbereiche sind einstückig mit dem Gelenkelement 5 geformte Vorsprünge 57 vorgesehen. Die Vorsprünge 57 dienen der spielfreien Einrastung der Schnapphaken 56, d.h. des Gelenkelements 5 an den Außenlaschen 3 und umgekehrt.

Gemäß Fig.4 sind die Gelenkelemente 5, genauer ihr plattenartiger Rumpf, mit einer betragsmäßig deutlich geringeren Materialstärke als der Betrag ihrer Breite und Länge ausgeführt. Aus geeignetem Kunststoff hergestellt wirken die Gelenkelemente 5 somit in Art eines flexiblen Scharnierbands bzw. einer Blattfeder. Somit üben die Gelenkelemente 5 nach Abbiegung in Abwinkelungsstellung elastische Rückstellkräfte auf die benachbarten Laschen 2,3 aus, so dass die Kette 1 dazu neigt, in ihre Ausgangsposition zurückgestellt zu werden. Das Gelenkelement 5 kann auch so ausgeführt sein, dass im Wesentlichen keine oder nur sehr geringe:Rückstellkräfte erzeugt werden. Hierzu kann beispielsweise mittig zwischen einem Endbereich 52 und dem mittleren Bereich 51 eine Art dünnes Filmscharnier vorgesehen sein, so dass das Gelenkelement lediglich zur Längssicherung dient.

Somit ist das Gelenkelement 5 aus einem zur elastischen Deformierung (in der Ebene von Fig.4a) einerseits und zur Bildung der Schnapphaken 56 andererseits geeigneten Kunststoff einstückig geformt. Hierzu wird bevorzugt ein im Vergleich zum härteren Material der Laschen 2,3 besser geeigneter Kunststoff gewählt. Die kopfförmigen Endbereiche 52 zusammen mit den Verdickungen 53 und der Aussparung 54 im mittleren Bereich gewährleisten eine hohe Festigkeit der Verbindung zwischen Gelenkelement und Laschen 2, 3 in Zugrichtung.

Ferner ist, wie am besten aus Fig.4a ersichtlich, jedes Gelenkelement 5 mit spiegelsymmetrisch angeordneten Dämpfungsfortsätzen 58 versehen. Die Dämpfungsfortsätze 58 sind blattfederartig ausgebildet, d.h. mit deutlich geringerer Stärke als ihre Breite und Länge. Die Dämpfungsfortsätze 58 sind einstückig am Gelenkelement 5 angeformt bzw. mit diesem hergestellt, so dass sie jeweils flügelförmig in einem Winkel im Bereich zwischen 30° und 90° zur Längsachse des Gelenkelements 5 abstehen. Die Dämpfungsfortsätze 58 können eine andere Formgebung als die in Fig.4a abgebildete Bogenform aufweisen. Sie können beispielsweise wellenförmig, zick-zack-förmig oder an ihren Enden mit Verdickungen ausgestaltet sein. Die Breite der Dämpfungsfortsätze 58 in Richtung quer zur Längsrichtung der Energieführungskette 1 ist geringer als die Breite des Gelenkelements 5. Die Fortsätze 58 sind symmetrisch zur Längs-Mittelebene S1 (s. Fig.2a) und auch symmetrisch zur Höhen-Mittelebene S2 (s. Fig.2a) angeordnet. Die Dämpfungsfortsätze 58 sind freitragend und haben zwischen ihrem freien Ende und dem Fußpunkt am Rumpf des Gelenkelements 5 eine (Kurven-)Länge die zwischen 5% und 25% der Höhe der Lasche 2,3 in der Höhen-Mittelebene beträgt. Die Dämpfungsfortsätze 58 dienen dazu, mit ihrem freien Ende in den Bereich zwischen zwei zusammenwirkenden Anschlagflächen benachbarter Innen- und Außenlaschen 2, 3 hineinzuragen, um den Anschlag abzudämpfen und somit die Geräuschentwicklung zu reduzieren. Die Dämpfungsfortsätze 58 wirken jedoch im Vergleich zum Rumpf des Gelenkelements 5 im Wesentlichen keine Rückstellkraft aus. Die obengenannten Merkmale des Gelenkelements sind grundsätzlich unabhängig von der erfindungsgemäßen Gestaltung der Laschenstränge gemäß nachfolgender Beschreibung und können auch in anderen Ketten vorteilhaft eingesetzt werden.

Figuren 2a-2e zeigen einen ersten Typ der sich abwechselnden Laschentypen der Kette 1 aus Fig.1, genauer eine Innenlasche 2. Als Innenlasche 2 wird hierbei diejenige Lasche verstanden, welche auch im Bereich der Überlappung mit der jeweils benachbarten Lasche dem Führungskanal 3 zugewandt ist, welcher durch die parallel angeordneten Kettenstränge und Querstege 4a, 4b gebildet ist. Die Innenlasche 2 hat eine im Wesentlichen schmetterlingsförmige Grundplatte 21, die zu ihrer senkrecht zur Längsrichtung verlaufenden Höhen-Mittelebene S1 spiegelsymmetrisch ausgebildet ist. Ein Mittelbereich 22 der Innenlasche 2 ist im Vergleich zur Grundplatte 21 dicker ausgebildet, wie am besten aus der perspektivischen Ansicht in Fig.2e ersichtlich. Dieser verdickte Mittelbereich 22 bildet jeweils ein Paar erster spiegelsymmetrischer Anschlagflächen 23 und ein Paar zweiter spiegelsymmetrischer Anschlagflächen 24. Die ersten und zweiten Anschlagflächen 23, 24 sind spiegelsymmetrisch zur HöhenMittelebene S1. Die ersten Anschlagflächen 23 können ferner spiegelsymmetrisch zu den zweiten Anschlagflächen 24 bezüglich der Längs-Mittelebene S2 ausgestaltet sein. Vorzugsweise sind die ersten und zweiten Anschlagflächen 23, 24 jedoch leicht asymmetrisch bezüglich der Längs-Mittelebene S2. Durch entsprechende leichte Asymmetrie kann durch 180°-Drehung um die Querachse (Schnittlinie zwischen den Mittelebenen S1 und S2) eine andere Begrenzung der Abwinkelung eingestellt werden, insbesondere kann auch eine Einstellung der Vorspannung erfolgen. Zur Unterscheidung der gewählten Einstellung ist an der Außenseite der Innenlasche 2 eine entsprechende Markierung 25 vorgesehen.

Zur Aufnahme und Befestigung des Gelenkelements 5 sind in der Innenlasche 2 stirnseitig gerichtete Ausnehmungen 26 vorgesehen. Die Ausnehmungen 26 sind mittig und spiegelsymmetrisch sowohl zur Höhen-Mittelebene S1 als auch zur LängsMittelebene S2. Der Endbereich zur Mitte hin jeder Ausnehmung 26 ist zum formschlüssigen Eingriff der Verdickungen 53 des Gelenkelements 5 ausgebildet. Der stirnseitige Bereich jeder Ausnehmung 26 hingegen öffnet sich mit zunehmendem Abstand vom Endbereich und ermöglicht die gewünschte Verbiegung des Gelenkelements 5. Eine mittige Längsaussparung 26A an der Innenseite, am besten aus Fig.2B ersichtlich, dient der Aufnahme des mittigen Stegs 55 des Gelenkelements. In die nach innen offenen Ausnehmungen 26 und Längsaussparungen 26A wird das Gelenkelement somit von der Innenseite der Innenlasche 2 her eingefügt.

Stirnseitig hat die Innenlasche 2 ein Paar erste Vorsprünge 27 und ein Paar zweite Vorsprünge 28, welche jeweils quer nach Außen vorstehen. Die Vorsprünge 27, 28 sind ebenfalls einstückig mit der Grundplatte 21 geformt. Die Anordnung der ersten und zweiten Vorsprünge 27, 28 entspricht bzgl. Symmetrien analog derjenigen der ersten und zweiten Anschlagflächen 23, 24. Weiterhin sind stegförmige Hilfsanschläge 29 vorgesehen, welche die Ausnehmungen 26 in Richtung parallel zur Ebene S1 begrenzen.

Fig. 3a-3e zeigen eine Außenlasche 3 als komplementären Laschentyp der Kette aus Fig.1. Die Außenlasche 3 weist eine im Wesentlichen flächige Grundplatte 31 auf sowie einen gegenüber der Grundplatte 31 verdickten Mittelbereich 32. Die Grundplatte 31 bestimmt den Umriss in Seitenansicht, welcher sich deutlich vom symmetrischen Umriss der Grundplatte 21 der Innenlasche 2 unterscheidet. Der Umriss der Außenlasche 3 hat näherungsweise die Form eines gleichschenkligen symmetrischen Trapez, mit im Wesentlichen geraden oberen und unteren Schmalseiten bzw. Grundseiten parallel zur Längsrichtung, jedoch mit gekrümmten Schenkeln.

Die Außenlasche 3 nach Fig.3a-3e hat zur Begrenzung der Stellung mit geringster Abwinkelung ein Paar erste gegenüberliegende Anschlagflächen 33. Freies Tragen der Kette 1 wird also u.a. durch die ersten Anschlagflächen 33 gewährleistet. Die Anschlagflächen 33 sind durch die Stirnseiten der Außenlasche 3 ausgebildet und bezüglich der Höhen-Mittelebene S1 spiegelsymmetrisch ausgeführt. Die Außenlasche 3 hat weiterhin ein Paar zweite Anschlagflächen 34, die sich ebenfalls gegenüberliegen und spiegelsymmetrisch bezüglich der Höhen-Mittelebene S1 ausgeführt sind. Die zweiten Anschlagflächen 34 dienen der Begrenzung der Relativstellung zweier benachbarter Laschen 2, 3 mit größtmöglicher Abwinkelung. Wie aus Fig.3a und Fig.3c am besten ersichtlich, sind die ersten Anschlagflächen 33 und die zweiten Anschlagflächen 34 jedoch nicht spiegelsymmetrisch bezüglich der Längs-Mittelebene S2, sondern deutlich asymmetrisch hierzu. Die zweiten Anschlagflächen 34 sind gegenüber den ersten Anschlagflächen zur Mitte hin versetzt und leicht, näherungsweise um die Querachse (Schnittlinie zwischen Ebenen S1 und S2) gedreht. Je nach Drehstellung der Außenlasche 3 um die Querachse schlagen entweder die ersten Anschlagflächen 33 der Außenlasche 3 an den ersten Anschlagflächen 23 der Innenlasche 2 an oder aber an den zweiten Anschlagflächen 24 der Innenlasche 2. Entsprechend Umgekehrtes gilt analog für die zweiten Anschlagflächen 34 der Außenlasche 3. Somit kann durch Anordnung der Außenlasche 3 mit der kürzeren Schmalseite unten wie in Fig.3 gezeigt oder um 180° gedreht mit der kürzeren Schmalseite oben, die Umlenkrichtung der Energieführungskette 1 verändert werden. Auch sind in Längsrichtung variable Anordnungen möglich, so dass Ketten mit wellenförmiger, zick-zack-, o.ä. Kurvenform, je nach Anwendung einstellbar sind. Entsprechendes gilt analog für die Einstellung einer Vorspannung durch Anordnung der Innenlasche 2 mit den nur leicht asymmetrischen ersten und zweiten Anschlagflächen 23, 24. So wird nicht nur der dynamische Kurvenverlauf der Energieführungskette 1 durch geeignet gedrehte Anordnung der Innen- und Außenlaschen 2,3 eingestellt, sondern auch eine Feineinstellung ermöglicht. Eine Einstellung kann auch bezüglich der ruhend freitragenden Position der Energieführungskette 1, d.h. je nach Anwendung gerade, vorgespannt oder durchhängend, fein abgestimmt erfolgen.

Fig.3a-3e zeigen weiterhin ein Paar gegenüber liegender längsgerichteter Ausnehmungen 36, welche die kopfförmigen Endbereiche 52 des Gelenkelements 5 formschlüssig aufnehmen wie in FiG.1 gezeigt. Die Ausnehmungen 36 sind bezüglich beiden Ebenen S1 und S2 spiegelsymmetrisch geformt. Im zur Mitte gewandten Endbereich 36A sind die Ausnehmungen 36 jeweils im Längsschnitt an den Längsschnitt der Endbereiche 52 des Gelenkelements 5 angepasst. Zur Zusammenwirkung mit dem jeweiligen Schnapphaken 56 ist im Endbereich zur Außenseite hin eine Einschnappkante bzw. Schnappstufe 36B vorgesehen, welche der Schnapphaken 56 des eingreifenden Endbereichs 52 hintergreift. Durch Schnappstufe 36B und Schnapphaken 56 wird das Gelenkelement 5 an der Außenlasche 3 in Querrichtung gesichert und umgekehrt. Dadurch, dass die Außenlaschen 3 an den Innenlaschen 2 mittels einer Schnappverbindung 56, 36B in Querrichtung gesichert sind, wird die Einsparung von Querstegen 4a, 4b ermöglicht. In der Tat erübrigen sich, wie aus Fig.1 ersichtlich, Querstege 4a, 4b an Außenlaschen 3, so dass diese kosten- und gewichtssparend nur noch an den Innenlaschen 3 vorgesehen sind. Alternativ können die Querstege auch nur an den Außenlaschen vorgesehen werden.

Die Ausnehmungen 36 sind weiterhin mit im Längsschnitt stufenförmigen Hilfsanschlägen 39 versehen, welche entsprechend den ersten und zweiten Anschlagflächen 33, 34 asymmetrisch angeordnet sind. Die Hilfsanschläge 39 wirken mit den stirnseitigen Hilfsanschlägen 29 an den Ausnehmungen der Innenlasche 2 zusammen. Die stegförmigen Hilfsanschläge 29 dienen jedoch insbesondere der Begrenzung einer Relativverschiebung der zwischen verbundenen Laschen 2, 3 in Höhenrichtung parallel zur Ebene S2, d.h. senkrecht zur Längsrichtung, in gestreckter Stellung der Kette 1. Hierzu wirken die Hilfsanschläge 29 zusammen mit den oberen und unteren Begrenzungsflächen der Ausnehmungen 36, welche die Hilfsanschläge 29 bilden. Zur Begrenzung der Verschiebung senkrecht bei maximal abgewinkelter Stellung sind an der Außenlasche zusätzlich weitere Hilfsanschläge 39A spiegelsymmetrisch vorgesehen. Die weiteren Hilfsanschläge 39A sind hierzu so angeordnet, dass hieran die entsprechenden Schmalseiten der Innenlasche 2 anschlagen können.

Im Überlappungsbereich der Außenlasche 3, mit welchem diese seitlich der Innenlasche 2 überlappend gegenüberliegt, sind ein Paar erste Ausnehmungen 37 und ein Paar zweite Ausnehmungen 38 vorgesehen. Die Ausnehmungen 37, 38 sind näherungsweise sektorförmig zwischen den ersten bzw. zweiten Anschlagflächen 33, 34 und dem verdickten Mittenbereich 32 zur Innenseite offen. Die ersten Ausnehmungen 37 sowie auch die zweiten Ausnehmungen 38 sind jeweils paarweise spiegelsymmetrisch zur Höhen-Mittelebene S1. In die Ausnehmungen 37, 38 greifen bei zusammengesetztem Strang jeweils die ersten Vorsprünge 27 bzw. die zweiten Vorsprünge 28 ein. Die Höhe des freien Querschnitts der Ausnehmungen 37, 38 nimmt hierbei vorzugsweise zu den Anschlagflächen 33, 34 hin ab bis zum Betrag der entsprechenden Höhe der Vorsprünge 27, 28, wodurch der Umlenkbogen der Kette 1 stabilisiert wird. Durch die Ausnehmungen 37, 38 und die hierin eingreifenden Vorsprünge 27, 28 wird auch die Verschiebung senkrecht zur Längsrichtung der Kette begrenzt, zusammen mit den Hilfsanschlägen 29, 39A.

Fig.3c zeigt weiter Paare aus dritten und vierten Anschlagflächen 37A, 38A, welche jeweils zur Höhen-Mittelebene S1 hin die Ausnehmungen 37, 38 begrenzen. Wie insbesondere aus Vergleich der Draufsicht und Isometrie nach Fig.3d bzw. Fig.3e mit der Rückansicht nach Fig.3c ersichtlich, sind die dritten und vierten Anschlagflächen 37A, 38A jeweils stirnseitig durch den verdickten Mittelbereich 32 gebildet. Der Mittelbereich 32 hat zur Verstärkung zwischen den Anschlagflächen 37A, 38A eine Art Rippengestell mit mehreren Längsund einer mittigen Senkrechtrippe, wie in Fig.3c gezeigt.

Die dritten Anschlagflächen 37A sind, bezüglich der ersten Anschlagflächen 33, ebenfalls zur Höhen-Mittelebene S1 spiegelsymmetrisch jedoch zur Mitte der Außenlasche 3 hin versetzt. Entsprechendes gilt analog für die vierten Anschlagflächen 38A in Bezug auf die zweiten Anschlagflächen 34. In gleichem Maße wie die ersten und zweiten Anschlagflächen 33, 34 sind auch die dritten und vierten Anschlagflächen 37A, 38A asymmetrisch zur Längs-Mittelebene S2. Die dritten und vierten Anschlagflächen 37A, 38A wirken zusammen mit dritten und vierten Anschlagflächen 27A, 28A an den Stirnflächen der Innenlasche 2 im Bereich der Vorsprünge 27, 28. Die dritten und vierten Anschlagflächen 27A, 28A; 37A, 38A begrenzen somit ebenfalls - je nach Orientierung bezüglich der Querachse - entweder die größtmögliche oder die geringste Abwinkelung zwischen benachbarten Laschen 2, 3.

In dem Endbereich der dritten und vierten Anschlagflächen 37A, 38A zur Längs-Mittelebene S2 hin können flächige Aussparungen (nicht näher bezeichnet) mit geringer Tiefe vorgesehen werden, welche die Dicke der Dämpfungsfortsätze 58 der Gelenkelemente 5 vorzugsweise ganz aufnehmen können. Hierdurch wird eine Beeinträchtigung der Zusammenwirkung der gekrümmten Anschlagflächen 37A, 38A bzw. 27A, 28A ohne Verlust der gewünschten Zusatzdämpfung vermieden.

Wie aus dem Vergleich von Fig.2a mit Fig.3c hervorgeht, bilden die Fortsätze 27, 28 der Innenlasche 2 Paare aus fünften und sechsten Anschlagflächen 27B, 28B die - zur weiteren Vergrößerung des gesamten Anschlagflächenmaß - zusammen mit entsprechenden fünften und sechsten Anschlagflächen 37B, 38B der Außenlasche 3 wirken. Die fünften und sechsten Anschlagflächen 27B, 28B der Innenlasche 2 sind der Mittelebene S1 zugewandt. Die fünften und sechsten Anschlagflächen 37B, 38B der Außenlasche 3 begrenzen die Ausnehmungen 37 bzw. 38 gegenüberliegend den dritten und vierten Anschlagflächen 37A, 38A. Die Mittelbereiche 22, 32, die Fortsätze 27, 28 und die Ausnehmungen 37, 38 sind so ausgestaltet und angeordnet, dass in Anschlagstellung der zweiten Anschlagflächen 34 der Außenlasche 3 an den zweiten Anschlagflächen 24 der Innenlasche 2 auch die jeweiligen vierten Anschlagflächen 28A, 38A sowie auch die jeweiligen fünften Anschlagflächen 27B, 37B im Anschlag sind. Analog ist die Ausgestaltung so, dass in Anschlagstellung der ersten Anschlagflächen 33 der Außenlasche 3 an den ersten Anschlagflächen 23 der Innenlasche 2 auch die jeweiligen dritten Anschlagflächen 27A, 37A sowie auch die jeweiligen sechsten Anschlagflächen 28B, 38B im Anschlag sind. Insgesamt wird dadurch eine hohe Stabilität im jeweiligen Anschlag gewährleistet.

Wie ferner aus Fig.2a-2e und Fig.3a-3e ersichtlich, sind die ersten und zweiten Anschlagflächen 23, 24 der Innenlasche und die entsprechend zusammenwirkenden ersten und zweiten Anschlagflächen 33, 34 der Außenlasche gekrümmt ausgebildet. Um eine Drehung der Außenlasche 3 um 180° zu ermöglichen, ohne die Stabilität im Anschlag zu beeinträchtigen, ist die Krümmung der Anschlagflächen 23, 24; 33, 34 hierbei vorzugsweise identisch. Es werden vorzugsweise identische Krümmungen vorgesehen die nicht kreiszylindrisch sind, sondern ein sukzessives Anschmiegen der gekrümmten Anschlagflächen 23, 24; 33, 34 ermöglichen. Zweckmäßig kann bspw. Krümmung nach geeigneter Rollkurve bzw. einer Zykloiden sein. Entsprechend analog, ebenfalls identisch gekrümmt, jedoch mit schärfer ausgeprägter Krümmung, sind auch die dritten und vierten Anschlagflächen 37A, 38A der Außenlasche 3 und die dritten und vierten Anschlagflächen 27A, 28A der Innenlasche 2 identisch gekrümmt. Durch gekrümmte Anschläge lässt sich einerseits eine spielfreiere und stabilere Konfiguration im Anschlag erzielen. Insbesondere wird auch die Geräuschentwicklung vermindert, dadurch dass ein flächiges Anschlagen im eigentlichen Sinne vermieden wird. Zudem kann eine Art Zentrierwirkung in den Hauptebenen der Laschen 2,3 erreicht werden. Die fünften und sechsten Anschlagflächen 27B, 28B; 37A, 27B können gerade bzw. eben, wie in Fig.2a bzw. Fig.3c, oder auch analog zu den vorgenannten Anschlagflächen 23, 24; 33, 34 bzw. 27A, 28A; 37A, 38A mit geeigneter Krümmung gestaltet sein.

Die nachfolgend beschriebenen Merkmale eines Schwenkhorns als separates Verbindungselement für die Querstege 4a, 4b sind grundsätzlich unabhängig von der erfindungsgemäßen Gestaltung der Laschenstränge können auch in anderen Ketten vorteilhaft eingesetzt werden.

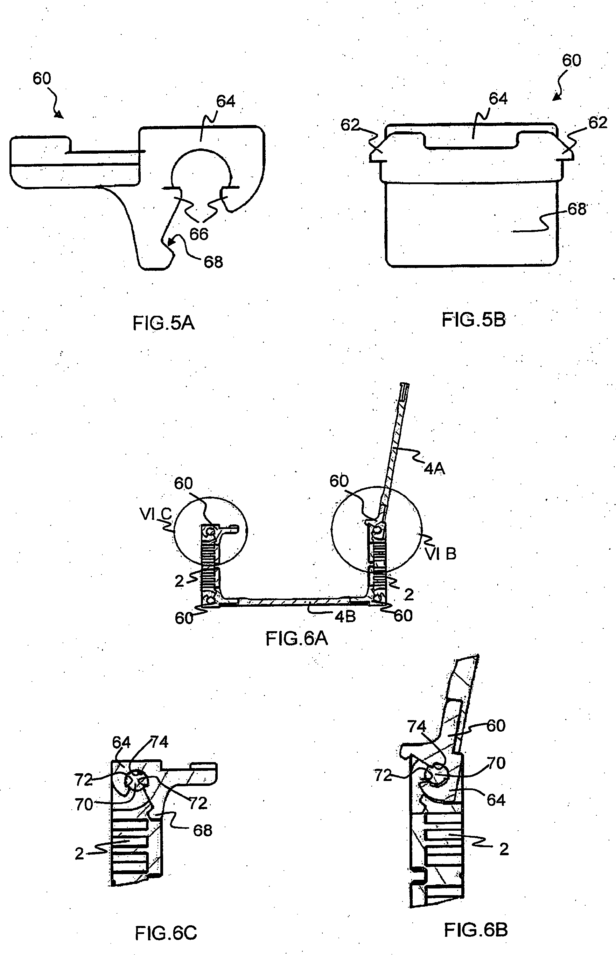

Fig.5a-5b zeigen ein als separates Bauteil ausgeführtes Schwenkhorn 60, das der einseitigen Befestigung eines Querstegs 4a, 4b an der gewünschten Lasche 2, 3 dient.

Das Schwenkhorn 60 hat im nach innen gewandten Endbereich einen herkömmlich gestalteten Verbinder mit Rastvorsprüngen 62. Stehen in Längsrichtung (bzgl. der Kette 1), d.h. quer zur Mittelachse eines angeschlossenen Querstegs 4a, 4b, hervor und sind symmetrisch angeordnet, wie aus Fig.5b ersichtlich. Der Verbinder für die Querstege 4a, 4b ist bekannter Bauart, bspw. gemäß Patentschrift DE 53 31 066 der Anmelderin, und dient somit zum Einrasten von herkömmlich ausgeführten Querstegen 4a, 4b.

Im nach außen gewandten Bereich hingegen hat das Schwenkhorn 60 eine scharnierartige Klaue 64, welche sich in Längsrichtung erstreckt, d.h. parallel zum Hervorstehen der Rastvorsprünge 62. Die Klaue 64 dient zur einrastenden jedoch schwenkbaren Befestigung an einer Lasche. Zur Rastverbindung hat die Klaue 64 nach innen gerichtete axial erstreckte Rastnasen oder Rasthaken 66.

Ein Lagerbolzen bzw. Halteschaft 70 zur Rastverbindung mit der Klaue 64 des Schwenkhorns 60 und des damit verbundenen Querstegs 4a, 4b, ist jeweils in einer Aussparung in der oberen und unteren Schmalseite der Innenlasche 2 vorgesehen, wie bspw. in Fig.2a-2e gezeigt. Zwei Halteschafte 70 sind jeweils symmetrisch zur Längs-Mittelebene S2 angeordnet, wodurch obere und untere Querstege schwenkbar mittels entsprechenden Schwenkhörnern nach Fig.5 befestigt werden können, wie in Fig.1 gezeigt. Alternativ oder zusätzlich könnten auch entsprechende Halteschafte 70 in den Außenlaschen angeordnet sein. Die Halteschafte 70 sind in mittigen Aussparungen im Mittelbereich 22 vorgesehen und erstrecken sich in der Längsrichtung. Wie ferner insbesondere aus Fig.2d ersichtlich, sind die Halteschafte 70 jeweils zwischen der Innenseite und der Außenseite der Innenlasche, vorzugsweise mittig, vorgesehen. Entsprechend stehen keine herkömmlich angeformten Rastnasen von den Laschen 2, 3 nach innen hervor, so dass bei gelösten Schwenkhörnern der Kanal in der Kette 1 leicht zugänglich wird und sich Leitungen beim Ein- und Ausführen nicht verhaken.

Vorzugsweise sind die Halteschafte 70 mit in Fig.6a-c näher gezeigten Rastmitteln versehen, welche mit dem Schwenkhorn zusammenwirken zur Rastung in der aufgeklappten Stellung (siehe Fig.6a) und in einer zugeklappten Stellung (siehe Fig.6b). Wie am Besten aus Fig.6b-6c ersichtlich, sind die Halteschafte 70 im Querschnitt über einen gewissen Bogen mit einer zur Laschenmitte gewandten Abstufung bzw. Aussparung versehen. Letztere bildet axial erstreckte Kanten 72. Die beiden Rastnasen 66 des Schwenkhorns 60 hintergreifen diese Kanten 72 in der geschlossenen Stellung gemäß Fig.6C. Wie am besten aus Fig.6B ersichtlich, hat jeder Halteschaft 70 ferner eine nach oben bzw. unten gewandte zusätzliche axiale Rastkerbung 74, in welcher der innere Rasthaken 66 eingreift um den Quersteg 4a, 4b in offener d.h. aufgeschwenkter Stellung gemäss Fig.6a zu verrasten. Ferner zeigt Fig.5a auch den Zusatzanschlag 68 am Schwenkhorn 60. In geschlossener Stellung, am besten aus Fig.6c ersichtlich, liegt der Zusatzänschlag 68 formschlüssig an einem entsprechenden Gegenanschlag im Bereich der nach innen gewandten Ober- bzw. Unterkante des Mittelbereichs 22 der Lasche 2 an. Die Aussparungen in der Lasche 2, welche die Haltschafte 70 freigeben, sind jeweils entsprechend so dimensioniert, dass das Schwenkhorn 60 um den Halteschaft 70 schwenkbar ist. Der Mittelbereich 22 ist an seiner Ober- bzw. Unterkante, wie in Fig.6B gezeigt, nach innen hin und nach oben bzw. unten rampenartig ansteigend geformt, so dass auch eine Ecke des Schwenkhorns 60 hieran in aufgeschwenkter Stellung zusätzlich gehalten wird.

Das vorstehend beschriebene Schwenkhorn 60 dient somit als Adapter zur schwenkbaren Befestigung herkömmlicher, an sich nicht schwenkbar ausgelegter Querstege 4a, 4b, an den Kettenlaschen 2, 3. Auch andere als die vorstehend beschriebenen Laschen 2, 3 können mit zum Schwenkhorn 60 kompatiblen Halteschaften 70 versehen werden.

In der Praxis hat sich neben der vertikalen Spiegelsymmetrie der Bauteile die vorgeschlagene Krümmung der zusammenwirkenden Anschlagflächen 23, 33 bzw. 24, 34 etc., wie beispielhaft aus den Fig.2A und Fig.3A bzw. Fig.2B und Fig.3B erkennbar, als besonders vorteilhaft erwiesen. Das hierdurch erzielte sukzessive Anschmiegen von innen, d.h. von der Seite der Gelenkelemente 5, nach Außen hin ermöglicht durch geringfügige werkstoffabhängige elastische Verformung der Laschen 2, 3 ein gegenseitiges Anpassen der Laschen 2, 3 und somit den Ausgleich herstellungsbedingter Toleranzen. Das Anschmiegen der gekrümmten Anschlagflächen 23, 33 bzw. 24, 34 etc. setzt sich progressiv fort bis ein möglichst vollflächiges Anliegen im Anschlag erzielt wird. Die geeignete Kurvenform der gewünschten durchgehenden bzw. stetigen und streng monotonen Krümmung kann durch Versuche empirisch ermittelt werden. Die Kurvenform ist insbesondere in Funktion vom gewählten Material der einzelnen Laschen 2, 3 und insbesondere des Gelenkelements 5, zu wählen da diese u.a. von der Elastizität und der Gelenkkinematik abhängt.

### Energieführungskette mit deformierbaren Gelenkelementen

### Bezugszeichenliste

- 1: Energieführungskette
- 2: Innenlasche
- 3: Außenlasche
- 4a: Quersteg
- 4b: Quersteg
- 5: Gelenkelement
- 21: Grundplatte
- 22: Mittelbereich
- 23: erste Anschlagfläche
- 24: zweite Anschlagfläche
- 25: Markierung
- 26: Ausnehmung
- 26: Längsausparung
- 27: erste Vorsprünge
- 28: zweite Vorsprünge
- 27A: dritte Anschlagfläche
- 28A: vierte Anschlagfläche
- 27B: fünfte Anschlagfläche
- 28B: sechste Anschlagfläche
- 29: Hilfsanschläge
- 31: Grundplatte
- 32: Mittelbereich
- 33: erste Anschlagfläche
- 34: zweite Anschlagfläche
- 36: Ausnehmung
- 36A: Ausnehmungsendbereich
- 36B: Raststufe
- 37: erste Vorsprünge
- 38: zweite Vorsprünge
- 37A: dritte Anschlagfläche
- 38A: vierte Anschlagfläche
- 37B: fünfte Anschlagfläche
- 38B: sechste Anschlagfläche
- 39: Hilfsanschlag
- 39A: weiterer Hilfsanschlag
- 51: mittlerer Bereich
- 52: Endbereich
- 53: Verdickung
- 54: Aussparung
- 55: Steg
- 56: Schnapphaken
- 57: Vorsprünge
- 58: Dämpfungsfortsätze
- 60: Schwenkhorn
- 62: Rastvorsprünge
- 64: Scharnierklaue
- 66: Rasthaken
- 68: Zusatzanschlag
- 70: Halteschaft
- 72: Kanten
- 74: Rastkerbung
- S1: Höhen-Mittelebene
- S2: Längs-Mittelebene

## Patentansprüche

1. Energieführungskette (1) zur Führung von Kabeln, Schläuchen oder dergleichen, mit einer Vielzahl gelenkig miteinander verbundener Laschen (2, 3), aus welchen zwei parallele und durch Querstege (4a, 4b) verbundene Laschenstränge lösbar zusammengesetzt sind und welche mittels Gelenkverbindung gegeneinander abwinkelbar sind, wobei die Gelenkverbindung zwischen benachbarten Laschen durch ein Gelenkelement (5) gebildet wird, welches elastisch deformierbar ist sodass die jeweils verbundenen Laschen in einer Abwinkelungsrichtung gegeneinander abwinkelbar sind, wobei
sich in jedem Laschenstrang in Längsrichtung der Energieführungskette jeweils unterschiedliche Innenlaschen (2) und Außenlaschen (3) abwechseln, wobei sowohl die Innenlaschen (2) als auch die Außenlaschen (3) jeweils zu ihrer senkrecht zur Längsrichtung verlaufenden Höhen-Mittelebene (S1) spiegelsymmetrisch gestaltet sind, so dass gleiche Innenlaschen und gleiche Außenlaschen zum lösbaren Zusammensetzen beider Laschenstränge verwendbar sind, und
die Gelenkelemente (5), welche
- als separate Bauteile ausgeführt oder
- jeweils als zwei stirnseitig hervorstehende Gelenkelemente an beiden Stirnseiten der ersten oder der zweiten Lasche eines Paars aus Innenlasche und Außenlasche angeformt sind,
gegenüberliegende Endbereiche (52) zur Sicherung benachbarter, lösbar miteinander verbundener Innen- und Außenlaschen (2; 3) in Längsrichtung der Energieführungskette aufweisen, welche bezüglich der Höhen-Mittelebene (S1) spiegelsymmetrisch ausgebildet sind.

2. Energieführungskette nach Anspruch 1, **dadurch gekennzeichnet, dass** die Innenlaschen (2) und die Außenlaschen (3) gekrümmte Anschlagflächen (23; 33) zur Begrenzung der Endlage mit geringster Abwinkelung und/oder gekrümmte Anschlagflächen (24; 34) zur Begrenzung der Endlage mit größter Abwinkelung aufweisen.

3. Energieführungskette nach Anspruch 1 oder 2, **dadurch gekennzeichnet, dass** die Innenlasche (2) und Außenlasche (3) sich im Umriss ihrer Seitenansicht zumindest durch unterschiedliche Gestaltung der in Längsrichtung gegenüberliegenden Stirnseiten unterscheiden, wobei die beiden Stirnseiten mindestens der ersten Lasche (3) eines Paars aus Innenlasche und Außenlasche erste und zweite Anschlagflächen (33, 34) bilden, welche bezüglich der in Längsrichtung der Energieführungskette verlaufenden Längs-Mittelebene (S2) der Lasche asymmetrisch sind, wobei die ersten Anschlagflächen (33) die Endlage mit geringster Abwinkelung begrenzen und die zweiten Anschlagflächen (34) die Endlage mit größter Abwinkelung begrenzen, und wobei vorzugsweise die zweite Lasche (2) des Paars mit den ersten und zweiten Anschlagflächen (33, 34) der Stirnseiten der ersten Lasche (3) zusammenwirkende erste und zweite Anschlagflächen (23, 24) aufweist, welche bezüglich der Längs-Mittelebene in geringerem Maß asymmetrisch sind verglichen mit den asymmetrischen ersten und zweiten Anschlagflächen der ersten Lasche (3).

4. Energieführungskette nach Anspruch 3, **dadurch gekennzeichnet, dass** die ersten und zweiten Anschlagflächen (33, 34) der ersten Lasche identisch gekrümmt, vorzugsweise konvex gekrümmt, und die zusammenwirkenden ersten und zweiten Anschlagflächen (23, 24) der zweiten Lasche kongruent gekrümmt, vorzugsweise kongruent konkav gekrümmt, ausgebildet sind.

5. Energieführungskette nach Anspruch 3 oder 4, **dadurch gekennzeichnet, dass** Innenlasche und Außenlasche (2,3) jeweils in Längsrichtung aneinandergrenzende verdickte Mittenbereiche (22, 32) und hieran stirnseitig anschließend dünnere Überlappungsbereiche aufweisen, mit denen Innen- und Außenlaschen in Längsrichtung überlappen, wobei stirnseitig am Mittenbereich (22) der zweiten Lasche die ersten und zweiten Anschlagflächen (23, 24) der zweiten (2) Lasche vorgesehen sind und vorzugsweise stirnseitig am Mittenbereich (32) der ersten Lasche (3) dritte und vierte Anschlagflächen (37A, 38A) vorgesehen sind, welche mit dritten und vierten Anschlagflächen (27A, 28A) an den Stirnseiten der zweiten Lasche (2) zusammenwirken.

6. Energieführungskette nach Anspruch 5, **dadurch gekennzeichnet, dass** die dritten und vierten Anschlagflächen (37A, 38A) der ersten Lasche (3) gekrümmt, insbesondere identisch gekrümmt, sind, wobei die zusammenwirkenden dritten und vierten Anschlagflächen (27A, 28A) der zweiten Lasche (2) kongruent gekrümmt, insbesondere identisch gekrümmt, sind, vorzugsweise gemäß einer schärferen Krümmung als die ersten und zweiten Anschlagflächen (23, 24).

7. Energieführungskette nach Anspruch 4 oder 6, **dadurch gekennzeichnet, dass** die Krümmung der ersten und zweiten Anschlagflächen (33, 34; 23, 24) und/oder der dritten und vierten Anschlagflächen (27A, 28A; 37A, 38A) ein sukzessives Anschmiegen der Anschlagflächen ermöglicht.

8. Energieführungskette nach einem der vorhergehenden Ansprüche, **dadurch gekennzeichnet, dass** das Gelenkelement (5) an jedem Endbereich (52) mindestens ein erstes Schnappmittel (56) umfasst, welches mit einem entsprechenden zweiten Schnappmittel (36A, 36B) der ersten Lasche (3) des Paars zusammenwirkt, wobei erstes und zweites Schnappmittel eine Schnappverbindung (56, 36A, 36B) bilden zur Halterung der ersten Lasche (3) an der zweiten Lasche des Paars quer zur Längsrichtung.

9. Energieführungskette nach Anspruch 8, **dadurch gekennzeichnet, dass** jeweils lediglich jede zweite Lasche (2) aus beiden Laschensträngen mittels eines oberen und unteren Querstegs (4a, 4b) verbunden ist und die ersten Laschen (3) durch Schnappverbindung (56, 36A, 36B) mit dem Gelenkelement (5) quer zur Längsrichtung an den mittels Querstegen verbundenen Laschen (2) gehalten sind.

10. Energieführungskette nach einem der Ansprüche 1 bis 9, insbesondere nach Anspruch 9, **dadurch gekennzeichnet, dass** die Gelenkelemente jeweils drei Laschen, insbesondere zwei erste Laschen (3) mit einer zwischenliegenden zweiten Lasche (2), verbinden.

11. Energieführungskette nach Anspruch 10, **dadurch gekennzeichnet, dass** jedes Gelenkelement (5) eine maximale Breite aufweist, welche höchstens der maximalen Breite der Laschen entspricht, und jedes Gelenkelement in einem mittleren Bereich eine Aussparung (54) aufweist, mit welcher es in Halterichtung der Schnappverbindung (56, 36A, 36B) an der mittleren (2) der drei Laschen gehalten ist.

12. Energieführungskette nach einem der vorhergehenden Ansprüche, **dadurch gekennzeichnet, dass** das Gelenkelement (5) Dämpfungsfortsätze (58) aufweist, welche zur Dämpfung mit einem freien Ende zwischen zusammenwirkende Anschlagflächen (23, 24; 33, 34) der Laschen hineinreichen.

13. Energieführungskette nach einem der vorhergehenden Ansprüche, **dadurch gekennzeichnet, dass** Innenlasche und/oder Außenlasche (2, 3) an ihrer oberen und unteren Schmalseite eine mittige Aussparung aufweisen, in welcher ein in Längsrichtung verlaufender Halteschaft (70) vorgesehen ist, zur schwenkbaren scharnierartigen Befestigung eines Querstegs (4a, 4b) zumindest einseitig, vorzugsweise beidseitig, schwenkbar am entsprechenden Halteschaft (70), wobei vorzugsweise an jedem Quersteg (4a, 4b) zumindest einseitig, vorzugsweise beidseitig ein Schwenkhorn (60) als separates Bauteil befestigt ist, welches einerseits eine scharnierartige Klaue (64) zur schwenkbaren Lagerung am Halteschaft (70) und andererseits Rastmittel zur einrastenden Befestigung am Quersteg aufweist, insbesondere Rastvorsprünge (62), welche in Längsrichtung der Energieführungskette (1) hervorstehen.

14. Energieführungskette nach Anspruch 13, **dadurch gekennzeichnet, dass** der Halteschaft (70) zur Einrastung in einer aufgeklappten Stellung und/oder in einer zugeklappten Stellung, mit dem Schwenkhorn (60) zusammenwirkende Rastmittel aufweist, vorzugsweise eine oder mehrere axiale Ausnehmungen (72; 74) welche mit entsprechenden innengerichteten Rasthaken (66) am Schwenkhorn zusammenwirken.

15. Energieführungskette nach einem der vorhergehenden Ansprüche, **dadurch gekennzeichnet, dass** das Gelenkelement (5) in der in Längsrichtung der Energieführungskette verlaufenden Längs-Mittelebene (S2) der Laschen (2,3) angeordnet ist.

## Claims

1. An energy guide chain (1) for guiding cables, hoses or the like, having a plurality of links (2, 3) articulated with one another, from which two parallel link strands connected by transverse webs (4a, 4b) are detachably assembled, and which can be angled to one another by means of articulated connection, wherein the articulated connection between adjacent links is formed by a joint element (5), which is elastically deformable so that the respectively connected links can be angled to one another in an angling direction, wherein in each link strand, respectively different internal links (2) and external links (3) alternate in the longitudinal direction of the energy guide chain, wherein both the internal links (2) and also the external links (3) are designed as mirror-symmetrical respectively to their vertical center plane (S1) extending perpendicularly to the longitudinal direction, so that identical internal links and identical external links are usable for detachable assembly of both link strands, and
wherein the joint elements (5), which
- are embodied as separate components, or
- are respectively are molded onto both end faces as two joint elements frontally protruding on the first or the second link of a pair composed of internal link and external link,
have opposing end regions (52) for securing adjacent internal and external links (2; 3), which are detachably connected to one another, in the longitudinal direction of the energy guide chain, the end regions (52) being implemented as mirror-symmetrical with respect to the vertical center plane (S1).

2. The energy guide chain according to Claim 1, **characterized in that** the internal links (2) and the external links (3) have curved stop faces (23; 33) for delimiting the end location with least angling and/or curved stop faces (24; 34) for delimiting the end location with greatest angling.

3. The energy guide chain according to Claim 1 or 2, **characterized in that** the internal links (2) and external links (3) differ in the outline of their side view at least through different design of the opposing end faces in the longitudinal direction, wherein the two end faces of at least the first link (3) of a pair composed of internal link and external link form first and second stop faces (33, 34), which are asymmetrical with respect to the longitudinal center plane (S2) of the link, which extends in the longitudinal direction of the energy guide chain, wherein the first stop faces (33) delimit the end location with least angling and the second stop faces (34) delimit the end location with greatest angling, and wherein preferably the second link (2) of the pair has first and second stop faces (23, 24), which interacts with the first and second stop faces (33, 34) of the end faces of the first link (3), and which are asymmetrical with respect to the longitudinal center plane to a lesser extent in comparison to the asymmetrical first and second stop faces of the first link (3).

4. The energy guide chain according to Claim 3, **characterized in that** the first and second stop faces (33, 34) of the first link are implemented as identically curved, preferably convexly curved, and the interacting first and second stop faces (23, 24) of the second link are implemented as congruently curved, preferably congruently concavely curved.

5. The energy guide chain according to Claim 3 or 4, **characterized in that** internal link and external link (2, 3) respectively have adjoining thickened middle regions (22, 32) in the longitudinal direction and thinner overlap regions, which adjoin frontally thereon, using which internal and external links overlap in the longitudinal direction, wherein the first and second stop faces (23, 24) of the second link (2) are provided frontally on the middle region (22) of the second link and preferably third and fourth stop faces (37A, 38A) are provided frontally on the middle region (32) of the first link (3), which interact with third and fourth stop faces (27A, 28A) on the end faces of the second link (2).

6. The energy guide chain according to Claim 5, **characterized in that** the third and fourth stop faces (37A, 38A) of the first link (3) are curved, in particular identically curved, wherein the interacting third and fourth stop faces (27A, 28A) of the second link (2) are congruently curved, in particular identically curved, preferably according to a sharper curvature than the first and second stop faces (23, 24).

7. The energy guide chain according to Claim 4 or 6, **characterized in that** the curvature of the first and second stop faces (33, 34; 23, 34) and/or of the third and fourth stop faces (27A, 28A; 37A, 38A) allow successive nestling of the stop faces.

8. The energy guide chain according to any one of the preceding claims, **characterized in that** the joint element (5) comprises on each end region (52) at least one first snap means (56), which interacts with a corresponding second snap means (36A, 36B) of the first link (3) of the pair, wherein first and second snap means form a snap connection (56, 36A, 36B) to hold the first link (3) on the second link of the pair transversely to the longitudinal direction.

9. The energy guide chain according to Claim 8, **characterized in that** respectively only every second link (2) from both link strands is connected by means of an upper and lower transverse web (4a, 4b) and the first links (3) are held by snap connection (56, 36A, 36B) to the joint element (5) transversely to the longitudinal direction on the links (2) connected by means of transverse webs.

10. The energy guide chain according to any one of Claims 1 to 9, in particular according to Claim 9, **characterized in that** the joint elements respectively connect three links, in particular two first links (3) with an interposed second link (2).

11. The energy guide chain according to Claim 10, **characterized in that** each joint element (5) has a maximum width, which at most corresponds to the maximum width of the links, and each joint element has an opening (54) in a middle region, using which it is held in the holding direction of the snap connection (56, 36A, 36B) on the middle (2) of the three links.

12. The energy guide chain according to any one of the preceding claims, **characterized in that** the joint element (5) has damping extensions (58) which extend for damping with one free end between interacting stop faces (23, 24; 33, 34) of the links.

13. The energy guide chain according to any one of the preceding claims, **characterized in that** internal link and/or external link (2, 3) have a central opening on their upper and lower narrow sides, in which a holding shaft (70) extending in the longitudinal direction is provided, for the pivotable hinge-type fastening of a transverse web (4a, 4b) at least on one side, preferably on both sides, pivotably on the corresponding holding shaft (70), wherein a pivot horn (60) is fastened as a separate component at least on one side, preferably on both sides, on each transverse web (4a, 4b), which pivot horn has, on the one hand, a hinge-type claw (64) for the pivotable mounting on the holding shaft (70) and, on the other hand, catch means for the latching fastening on the transverse web, in particular catch protrusions (62), which protrude in the longitudinal direction of the energy guide chain (1).

14. The energy guide chain according to Claim 13, **characterized in that** the holding shaft (70), for the latching in a folded-open position and/or in a folded-closed position, has catch means which interacts with the pivot horn (60), preferably one or more axial openings (72; 74), which interacts with corresponding inwardly-directed catch hooks (66) on the pivot horn.

15. The energy guide chain according to any one of the preceding claims, **characterized in that** the joint element (5) is arranged in the longitudinal center plane (S2) of the links (2, 3), which extends in the longitudinal direction of the energy guide chain.

## Revendications

1. Chaîne porte-câbles (1) pour guider des câbles, tuyaux ou similaire, comportant plusieurs éléments de maillon(2, 3) articulés l'un à l'autre et formant deux séries d'éléments de maillon qui sont parallèles et reliées par des éléments transversaux, les éléments de maillon pouvant prendre des positions angulaires l'un par rapport à l'autre au moyen d'une liaison articulée, la liaison articulée entre deux éléments de maillon adjacents étant réalisée par un élément d'articulation (5) apte à une déformation élastique de sorte que les éléments de maillon respectivement articulés peuvent prendre des positions angulaires l'un par rapport à l'autre dans un sens de pivotement,
chaque série d'éléments de maillon présentant dans le sens longitudinal de la chaîne porte-câbles une alternance d'éléments intérieurs (2) et éléments extérieurs (3) de type différent, lesdits éléments intérieurs (2) et lesdits éléments extérieurs (3) présentant une symétrie axiale par rapport à leur plan central vertical (S1) respectif qui s'étend perpendiculairement au sens longitudinal, de sorte qu'il est possible d'utiliser des éléments intérieurs et extérieurs identiques pour composer de manière détachable les deux séries d'éléments de maillon, et
les éléments d'articulation (5), qui
- sont réalisés en forme de composants séparés; ou
- sont réalisés en forme de deux éléments d'articulation respectifs faisant saillie et sont formés par moulage sur les deux faces frontales du premier élément ou du deuxième élément d'un couple de premier et deuxième éléments de maillon,
comportant des zones terminales (52) pour la fixation des éléments intérieurs et extérieurs (2; 3), qui sont reliés l'un à l'autre de manière détachable, dans le sens longitudinal de la chaîne porte-câbles, les zones terminales (52) présentant une symétrie axiale par rapport au plan central vertical (S1).

2. Chaîne porte-câbles selon la revendication 1, **caractérisée en ce que** les éléments intérieurs (2) et les éléments extérieurs (3) comportent des surfaces de butée courbées (23; 33) pour limiter la position finale de pivotement le plus faible et/ou des surfaces de butée courbées (24; 34) pour limiter la position finale de pivotement le plus grand.

3. Chaîne porte-câbles selon la revendication 1 ou 2, **caractérisée en ce que** l'élément intérieur (2) et l'élément extérieur (3) sont différents l'un de l'autre par leur contour de leur profil au moins par une configuration différente des faces frontales opposées, les deux faces frontales d'au moins le premier élément (3) d'un couple d'éléments intérieur et extérieur formant des premières et deuxièmes surfaces de butée (33, 34) qui sont asymétrique par rapport au plan central longitudinal (S2) de l'élément de maillon, plan qui s'étend dans le sens longitudinal de ladite chaîne porte-câbles, les premières surfaces de butée (33) limitant la position finale de pivotement le plus faible et les deuxièmes surfaces de butée (34) limitant la position finale de pivotement le plus grand, et de préférence le deuxième élément (2) du couple présentant des premières et deuxièmes surfaces de butée (23, 24) coopérant avec les premières et deuxièmes surfaces de butée (33, 34) des faces frontales du premier élément (3), surfaces de butée (23, 24) qui sont asymétriques par rapport au plan central longitudinal dans un moindre mesure que les premiers et deuxièmes surfaces de butée asymétriques du premier élément (3).

4. Chaîne porte-câbles selon la revendication 3, **caractérisé en ce que** les premiers et deuxièmes surfaces de butée (33, 34) du premier élément sont courbées de manière identique, de préférence de manière convexe, et les premières et deuxièmes surfaces de butée (23, 24) coopérantes du deuxième élément sont courbées de manière congruente, de préférence de manière concave et congruente.

5. Chaîne porte-câbles selon la revendication 3 ou 4, **caractérisée en ce que** l'élément intérieur et l'élément extérieur (2, 3) respectivement présentent des parties centrales (22, 32) épaissies adjacentes l'une à l'autre dans le sens longitudinal et des parties de chevauchement plus minces se joignant à la face frontale et par lesquelles les éléments intérieurs et extérieurs chevauchent dans le sens longitudinal, les premières et deuxièmes surfaces de butée (23,24) du deuxième élément (2) étant prévues à la partie centrale (22) de la face frontale du deuxième élément, et des troisièmes et quatrièmes surfaces de butée (37A, 38A) étant prévues de préférence à la partie centrale (32) de la face frontale du premier élément (3) qui coopèrent avec des troisièmes et quatrièmes surfaces de butée (27A, 27B) aux faces frontales du deuxième élément (2).

6. Chaîne porte-câbles selon la revendication 5, **caractérisée en ce que** les troisièmes et quatrièmes surfaces de butée (37A, 38A) du premier élément (3) sont courbées, en particulier de manière identique, les troisièmes et quatrièmes surfaces de butée (27A, 28A) du deuxième élément (2) étant courbées de manière congruente, en particulier de manière identique et de préférence selon une courbure plus serrée que les premières et deuxièmes surfaces de butée (23, 24).

7. Chaîne porte-câbles selon la revendication 4 ou 6, **caractérisée en ce que** la courbure des premières et deuxièmes surfaces de butée (33, 34; 23, 24) et/ou des troisièmes et quatrièmes surfaces de butée (27A, 28A; 37A, 38A) permet les surfaces de butée de s'épouser de manière successive.

8. Chaîne porte-câbles selon l'une quelconque des revendications précédentes, **caractérisée en ce que** l'élément d'articulation (5) comporte sur chaque zone terminale (52) au moins un premier moyen d'encliquetage (56) coopérant avec un deuxième moyen correspondant d'encliquetage (36A, 36B) du premier élément (3) du couple, le premier et le deuxième moyen d'encliquetage formant une liaison par encliquetage (56, 36A, 36B) pour la retenue du premier élément (3) sur le deuxième élément du couple transversalement par rapport au sens longitudinal.

9. Chaîne porte-câbles selon la revendication 8, **caractérisée en ce que** dans les deux séries d'éléments de maillon seulement un élément (2) de maillon sur deux est relié par une traverse supérieure et inférieure (4a, 4b) et les premiers éléments (3) sont retenus aux éléments (2) reliés par les traverses transversalement au sens longitudinal par la liaison par encliquetage (56, 36A, 36b) due à l'élément d'articulation (5).

10. Chaîne porte-câbles selon l'une quelconque des revendications 1 à 9, **caractérisée en ce que** les éléments d'articulation respectivement relient trois éléments de maillon, notamment deux premiers éléments (3) avec un deuxième élément (2) intermédiaire.

11. Chaîne porte-câbles selon la revendication 10, **caractérisée en ce que** chaque élément d'articulation (5) présente une largeur maximale qui correspond au plus à la largeur maximale des éléments de maillon et que chaque élément d'articulation présente dans sa partie centrale un évidement (54) par lequel il est retenu sur l'élément (2) des trois éléments de maillon dans le sens de retenue de la liaison par encliquetage (56, 36A, 36B).

12. Chaîne porte-câbles selon l'une quelconque des revendications précédentes, **caractérisée en ce que** l'élément d'articulation (5) présente des appendices d'amortissement (58) qui pour l'amortissement passent entre des surfaces de butée coopérantes (23, 24; 33, 34) des éléments de maillon par une extrémité libre.

13. Chaîne porte-câbles selon l'une quelconque des revendications précédentes, **caractérisée en ce que** l'élément intérieur et/ou extérieur (2, 3) présentent à leur côté étroit supérieur et inférieur un évidement central dans lequel est prévu une tige de support (70) qui s'étend dans le sens longitudinal pour fixer de façon pivotable et à la manière d'une charnière une traverse (4a, 4b) à la tige de support (70) correspondante au moins d'une côté et de préférence des deux côtés, une corne de pivotement (60) étant fixée comme un composant distinct de préférence à chaque traverse (4a, 4b) au moins d'un côté et de préférence des deux côtés, ledit composant distinct présentant une mâchoire (64) de type charnière pour le logement pivotable sur la tige de support d'une part et moyens d'encliquetage pour la fixation par encliquetage sur la traverse d'autre part, notamment des projectures d'encliquetage (62) qui font saillie dans le sens longitudinal de la chaîne (1).

14. Chaîne porte-câbles selon la revendication 13, **caractérisée en ce que** pour l'encliquetage dans une position ouverte et/ou dans une position fermée, le tige de support (70) présente des moyens d'encliquetage coopérant avec la corne de pivotement (60) et de préférence un ou plusieurs évidements (72; 74) axiaux coopérant avec des crochets d'encliquetage (66) orientés vers l'intérieur sur la corne de pivotement.

15. Chaîne porte-câbles selon l'une quelconque des revendications précédentes, **caractérisée en ce que**, l'élément d'articulation est disposé dans le plan central longitudinal (S2) des éléments de maillon (2, 3) qui s'étend dans le sens longitudinal de ladite chaîne porte-câbles.
